# EUROPÄISCHE PATENTSCHRIFT

(11) **EP 2 916 079 B1**
(45) Veröffentlichungstag und Bekanntmachung des Hinweises auf die Patenterteilung: **01.05.2019**
(21) Anmeldenummer: 15157708.7
(22) Anmeldetag: 05.03.2015
(51) Int. Cl.: F24D 13/02, E06B 1/52

(54) **RAHMENANORDNUNG FÜR FENSTER, TÜREN ODER VORHÄNGEFASSADEN MIT MINDESTENS EINEM HEIZMITTEL**
FRAME ASSEMBLY FOR WINDOWS, DOORS OR CURTAIN FAÇADES WITH AT LEAST ONE HEATING AGENT
SYSTÈME DE CADRE POUR FENÊTRES, PORTES OU MUR-RIDEAU DOTÉ D'AU MOINS UN MOYEN DE CHAUFFAGE

(30) Priorität: 05.03.2014 EP 14157852
(43) Veröffentlichungstag der Anmeldung: 09.09.2015
(73) Patentinhaber: Kawneer Aluminium Deutschland Inc., 58642 Iserlohn (DE)
(72) Erfinder: Breuils, Jacques, 67440 Westhouse-Marmoutier (FR)
(74) Vertreter: Trinks, Ole

(56) Entgegenhaltungen:
- DE-A1- 1 804 281
- DE-U1- 8 813 192
- NL-C1- 1 026 595

## Beschreibung

Die vorliegende Erfindung betrifft eine Rahmenanordnung für Fenster, Türen oder Vorhängefassaden gemäß dem Oberbegriff des unabhängigen Patentanspruchs 1.

Demgemäß betrifft die vorliegende Erfindung eine Rahmenanordnung mit mindestens einem außenseitigen Profil sowie mindestens einem raumseitigen Profil. Dabei ist das mindestens eine außenseitige Profil über mindestens ein thermisches Isolierelement mit dem raumseitigen Profil derart verbunden, dass zwischen dem mindestens einen raumseitigen Profil und dem mindestens einen außenseitigen Profil ein abgeschlossener Zwischenraum entsteht. Im Einzelnen betrifft das Dokument DE 88 13 192 U1 eine elektrische Heizvorrichtung für Metallfassaden, wobei diese elektrische Heizvorrichtung insbesondere dazu dient, eine Kondenswasserbildung an einer Glasscheibe zu verhindern. Diese Dokument offenbart eine Rahmenanordnung gemäß dem Oberbegriff des Anspruchs 1.

Derartige Rahmenanordnungen sind dem Prinzip nach aus dem Stand der Technik bekannt. Die üblicherweise aus Aluminium oder Kunststoff gefertigten Profile der herkömmlichen Rahmenanordnungen, werden über thermische Isolierelemente miteinander verbunden, um ungewollte Wärmebrücken zwischen den außenseitigen Profilen und den raumseitigen Profilen zu verhindern. Die Rahmenanordnungen dienen bspw. dazu, Scheibenanordnungen zu tragen, welche aus mehreren, hintereinander gelagerten Glasscheiben bestehen. Ein bekanntes Problem besteht darin, dass die Rahmenanordnungen oftmals schlechtere Wärmedurchgangskoeffizienten (K-Werte) aufweisen als die Glasscheibenanordnungen.

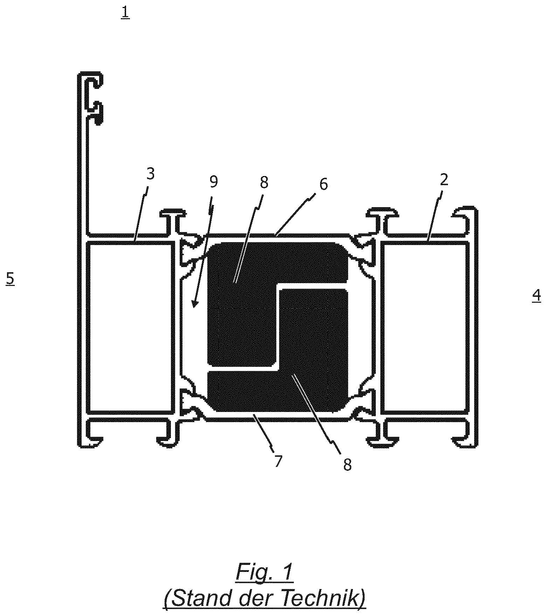

Aus den oben genannten Gründen ist es aus dem Stand der Technik bekannt, den Zwischenraum, zwischen dem raumseitigen Profil und dem außenseitigen Profil der Rahmenanordnung mit geschäumtem Dämmmaterial auszufüllen. Ein Beispiel für eine derartige, aus dem Stand der Technik bekannte Rahmenanordnung 1 ist der Fig. 1 zu entnehmen. Die dargestellte Rahmenanordnung 1 weist ein raumseitiges Profil 2 sowie ein außenseitiges Profil 3 auf, welche über zwei thermische Isolierelemente, sogenannte Isolierstege 6, 7, miteinander verbunden sind. Durch die Verbindung der beiden Profile 2, 3 über die Isolierstege 6, 7 entsteht ein abgeschlossener Zwischenraum 9, welcher zur Verringerung des Wärmedurchgangskoeffizienten (K-Wert) im Wesentlichen vollständig durch geschäumtes Dämmmaterial 8 ausgefüllt ist. Auf diese Weise wird nicht nur der Wärmeverlust aufgrund der Wärmeleitfähigkeit, sondern auch aufgrund der freien Konvektion zwischen der Rauminnenseite 4 und der Außenseite 5 verringert.

Gerade in Zeiten, in denen die Anforderungen an die Wärmedurchgangskoeffizienten von Gebäuden, beispielsweise durch die Energiesparverordnung immer höher werden, sind die Hersteller von Rahmenanordnungen für Fenster, Türen oder Vorhängefassaden stets auf der Suche nach Wegen und Möglichkeiten, um den Wärmedurchgangskoeffizienten zu verringern. Bisher wurde dies, wie oben bereits angedeutet, durch eine steigende Anzahl von thermischen Isolierelementen, wie beispielsweise geschäumten Dämmmaterialien, innerhalb der Rahmenanordnung erreicht. Derartige Lösungen führen jedoch zu steigenden Produktionskosten und zu einem Mehrverbrauch an Dämmmaterial, wodurch selbstverständlich auch die Umwelt in Mitleidenschaft gezogen wird.

Auf Grundlage der oben genannten Problemstellung liegt der vorliegenden Erfindung die Aufgabe zugrunde den Wärmedurchgangskoeffizienten (K-Wert) bekannter Rahmenanordnungen weiter zu verbessern, ohne den Einsatz an Dämmmaterial zu erhöhen bzw. ohne die Rahmenanordnung signifikant zu vergrößern.

Erfindungsgemäß wird die oben genannte Aufgabe durch den gekennzeichneten Teil des unabhängigen Patentanspruchs 1 gelöst.

Dementsprechend zeichnet sich die vorliegende Erfindung dadurch aus, dass die Rahmenanordnung mindestens ein Heizmittel zum Beheizen des abgeschlossenen Zwischenraums aufweist.

Der Grundgedanke der vorliegenden Erfindung liegt dementsprechend darin, den Temperaturgradienten zwischen der Rahmenanordnung und der Rauminnenseite zu verringern, um somit einen verbesserten Wärmedurchgangskoeffizienten zu erreichen. In diesem Zusammenhang nützt die vorliegende Erfindung die Tatsache, dass der Wärmedurchgangskoeffizient von der Temperaturdifferenz zwischen der Außentemperatur und der Raumtemperatur abhängt. Während die aus dem Stand der Technik bekannten Rahmenanordnungen darauf fokussiert sind den Wärmedurchgangswiderstand dadurch zu erhöhen, dass immer weitere Dämmmaterialien in die Rahmenanordnung eingebracht werden, wird durch die vorliegende Erfindung vorgeschlagen, die Temperaturdifferenz zwischen der Außenseite der Rahmenanordnung und der Rauminnenseite zu verringern.

Die Vorteile der erfindungsgemäßen Rahmenanordnung liegen auf der Hand: So kann durch den neuartigen Ansatz eine erhebliche Verbesserung des Wärmedurchgangskoeffizienten erreicht werden. Dabei ist es sogar denkbar, auf eine Vielzahl aus dem Stand der Technik bekannter thermischer Isolierelemente zu verzichten und dennoch die durch die Energiesparverordnung geforderten Wärmedurchgangswiderstandswerte zu erreichen. Es wurde festgestellt, dass der Energieaufwand zum Betreiben der erfindungsgemäßen Heizmittel in etwa dem eingesparten Wärmeverlust zwischen der Rauminnenseite und der Außenseite der Rahmenanordnung entspricht.

Vorteilhafte Weiterbildungen der erfindungsgemäßen Rahmenanordnung sind den Unteransprüchen zu entnehmen.

So ist es in einer ersten Realisierung der erfindungsgemäßen Rahmenanordnung vorgesehen, das mindestens eine thermische Isolierelement derart zwischen dem außenseitigen Profil und dem raumseitigen Profil anzuordnen, sodass das mindestens eine thermische Isolierelement den Zwischenraum in mindestens eine innere Profilkammer, welche mindestens teilweise durch das raumseitige Profil gebildet wird, und mindestens eine äußere Profilkammer, welche zumindest teilweise durch das außenseitige Profil gebildet wird, unterteilt. Auf diese Weise entstehen zwei thermische voneinander getrennte Profilkammern im Zwischenraum der Rahmenanordnung, wodurch ein Wärmeübergang durch freie Konvektion wirkungsvoll reduziert werden kann.

Das mindestens eine Heizmittel kann sich gemäß einer ersten Ausführungsvariante innerhalb der inneren Profilkammer befinden. Bei Versuchen wurde festgestellt, dass die Anordnung des mindestens einen Heizmittels innerhalb der inneren Profilkammer zu besonders niedrigen Wärmedurchgangskoeffizienten führt. Insbesondere kann der Energieverlust durch diese Anordnung auf etwa ein Drittel, im Vergleich zu einer Rahmenanordnung ohne Heizmittel, reduziert werden. Alternativ oder zusätzlich ist es jedoch auch denkbar, das mindestens eine Heizmittel innerhalb der äußeren Profilkammer bzw. zwischen der inneren und der äußeren Profilkammer anzuordnen. Auch hierdurch werden die Wärmeverluste auf unter 50 % reduziert. Es sei an dieser Stelle jedoch angemerkt, dass es grundsätzlich auch denkbar ist, mehrere Heizelemente in allen Bereichen des Zwischenraums, d. h. innerhalb der inneren Profilkammer und innerhalb der äußeren Profilkammer und/oder zwischen der inneren und der äußeren Profilkammer anzuordnen.

Nach einer weiteren Umsetzung weist die mindestens eine innere Profilkammer eine Vielzahl weiterer innerer Profilkammern auf, welche im Zwischenraum angeordnet und an dem innenseitigen Profil angebracht sind. Dabei ist das mindestens eine Heizmittel innerhalb einer der weiteren Profilkammern angeordnet. Selbstverständlich sind die weiteren Profilkammern dementsprechend als Unterkammern der inneren Profilkammer ausgebildet und stellen somit optimale Anbringungsmöglichkeiten für das mindestens eine Heizmittel dar. Prinzipiell ist es auch denkbar, weitere Profilkammern nachträglich in die bereits vorhandene innere Profilkammer herkömmlicher Rahmenanordnungen einzubringen, wobei diese weiteren Profilkammern demnach bereits das mindestens eine Heizmittel aufweisen.

Alternativ oder zusätzlich zu der oben genannten Ausführungsform ist es auch denkbar, dass die mindestens eine äußere Profilkammer eine Vielzahl weiterer äußerer Profilkammern aufweist, welche im Zwischenraum angeordnet und an dem außenseitigen Profil angebracht sind. Dabei ist es wiederum vorgesehen, dass das mindestens eine Heizmittel innerhalb einer der weiteren Profilkammern angeordnet ist. Hierbei ergeben sich im Wesentlichen dieselben Vorteile wie auch durch die oben erwähnten, weiteren, inneren Profilkammern.

Gemäß einem weiteren Aspekt der erfindungsgemäßen Rahmenanordnung, weist diese eine Steuereinrichtung auf, welche dazu ausgelegt ist, die Heizleistung des mindestens einen Heizmittels auf einen vorab bestimmbaren Wert zu regulieren.

Beispielsweise ist es denkbar, dass die Steuereinrichtung hierzu ein von der Rauminnenseite bedienbares Bedienelement aufweist, welches zur stufenlosen Einstellung des mindestens einen Heizmittels dient. Alternativ kann die Steuervorrichtung selbstverständlich auch von der Rahmenanordnung entfernt angeordnet sein und mit dem mindestens einen Heizmittel über Funk verbunden werden. In diesem Zusammenhang ist es beispielsweise denkbar, dass das mindestens eine Heizmittel der erfindungsgemäßen Rahmenanordnung über die zentrale Heizungssteuerung eines Gebäudes kontrolliert werden kann.

Die Steuereinrichtung kann vorzugsweise insbesondere dazu ausgelegt sein, die Heizleistung des mindestens einen Heizmittels auf einen Wert von 10 Watt zu regulieren. Selbstverständlich handelt es sich hierbei lediglich um einen "default"-Wert, welcher jederzeit durch den Bediener verändert werden kann. Durch Versuche hat es sich herausgestellt, dass eine Heizleistung von 10 Watt zu besonders geringen Wärmeverlusten führt.

Als Alternative zu den oben genannten Ausführungsvarianten ist es auch vorstellbar, dass der Bediener nicht die Heizleistung, sondern eine durch das mindestens eine Heizmittel erzielbare Temperatur im Zwischenraum der Rahmenanordnung reguliert. Diese Zwischenraumtemperatur kann beispielsweise von einem Temperatursensor innerhalb der Rahmenanordnung erfasst und an die Steuereinrichtung zurückgegeben werden.

Unabhängig von den vorab bestimmbaren Werten für die Heizleistung des mindestens einen Heizmittels, kann die Steuereinrichtung auch dazu ausgebildet sein, die Heizleistung des mindestens einen Heizmittels derart zu regulieren, dass die Temperatur im Zwischenraum der Rauminnentemperatur entspricht. Es wurde festgestellt, dass der Energieverlust zwischen der Rauminnenseite und der Außenseite durch eine derartige Regulierung des Heizelements auf unter 50 % reduziert werden kann.

Um die oben erwähnte Regulierung der Heizleistung des mindestens einen Heizelements zu gewährleisten, kann die erfindungsgemäße Rahmenanordnung einen ersten Temperatursensor zur Messung der Außentemperatur sowie einen zweiten Temperatursensor zur Messung der Rauminnentemperatur aufweisen. Auf Grundlage der durch die ersten und zweiten Temperatursensoren gemessenen Temperaturwerte kann die Steuereinrichtung die Regulierung der Heizleistung des mindestens einen Heizelements vornehmen. Als zweiter Temperatursensor zur Messung der Rauminnentemperatur kann dabei beispielsweise auch der Temperatursensor der Gebäudeheizung verwendet werden, wodurch das Vorsehen eines weiteren Temperaturfühlers nicht notwendig ist. Dagegen kann der erste Temperatursensor zur Messung der Außentemperatur bspw. auf der Außenseite des außenseitigen Profils angeordnet sein, jedoch ist es auch vorstellbar, dass die Außentemperatur über der Rahmenanordnung nahe gelegene Wetterstationen ermittelt wird. Beispielsweise kann die Steuervorrichtung über eine Internetverbindung Datenbanken abrufen, welche Informationen zur Außentemperatur in der Nähe der Rahmenanordnung bereithalten.

Nach einer weiteren Umsetzung der erfindungsgemäßen Rahmenanordnung, kann diese mindestens ein erstes Solarelement aufweisen, welches auf der Außenseite des mindestens einen außenseitigen Profils angebracht und mit dem mindestens einen Heizelement verbunden ist. Durch das mindestens eine erste Solarelement können die Kosten zur Erwärmung des mindestens einen Heizmittels - je nach Sonneneinstrahlung - reduziert werden bzw. vollständig wegfallen.

Das mindestens eine Heizelement kann als elektrisches Heizelement und/oder als Warmwasserheizung ausgebildet sein. Je nach Ausbildung des mindestens einen Heizmittels kann die Energieversorgung unterschiedlich ausgebildet sein. Beispielsweise ist es zur Versorgung des als elektrisches Heizelement ausgebildeten Heizmittels selbstverständlich von Vorteil, das Solarelement aus Photovoltaikzellen auszubilden, welche den zur Erwärmung des elektrischen Heizelements benötigten Strom produziert. Im Falle einer Warmwasserheizung ist es entsprechend von Vorteil, das mindestens eine erste Solarelement als thermischen Solarkollektor auszubilden, welcher die durch die Warmwasserheizung verlaufende Flüssigkeit erhitzt.

Das mindestens eine Heizmittel kann selbstverständlich auch als Gasheizung oder andere dem Fachmann bekannte Heizmittel ausgebildet sein.

Die erfindungsgemäße Rahmenanordnung wird im Folgenden anhand der in den Figuren dargestellten Ausführungsformen näher erläutert.

Dabei zeigen:
- Fig. 1:: Querschnitt durch eine aus dem Stand der Technik bekannte Rahmenanordnung;
- Fig. 2:: Querschnitt durch eine Rahmenanordnung die nicht Teil der Erfindung bildet.
- Fig. 3:: Querschnitt durch eine erste Ausführungsform der erfindungsgemäßen Rahmenanordnung; und
- Fig. 4:: Querschnitt durch eine Rahmenanordnung die nicht Teil der Erfindung bildet.

Aus Gründen der Übersichtlichkeit, werden in der nachfolgenden, detaillierten Figurenbeschreibung gleiche oder gleichwirkende Bauteile mit gleichen Bezugszeichen versehen.

Wie oben bereits erwähnt, ist aus der Fig. 1 bereits ein Querschnitt durch eine aus dem Stand der Technik bekannte Rahmenanordnung 1 zu erkennen. Diese zeichnet sich insbesondere dadurch aus, dass die innenseitigen und außenseitigen Profile 2, 3 über thermische Isolierstege 6, 7 bzw. schaumartige Dämmmaterialien 8 verbunden sind, sodass ein möglichst geringer Wärmedurchgangskoeffizient entsteht.

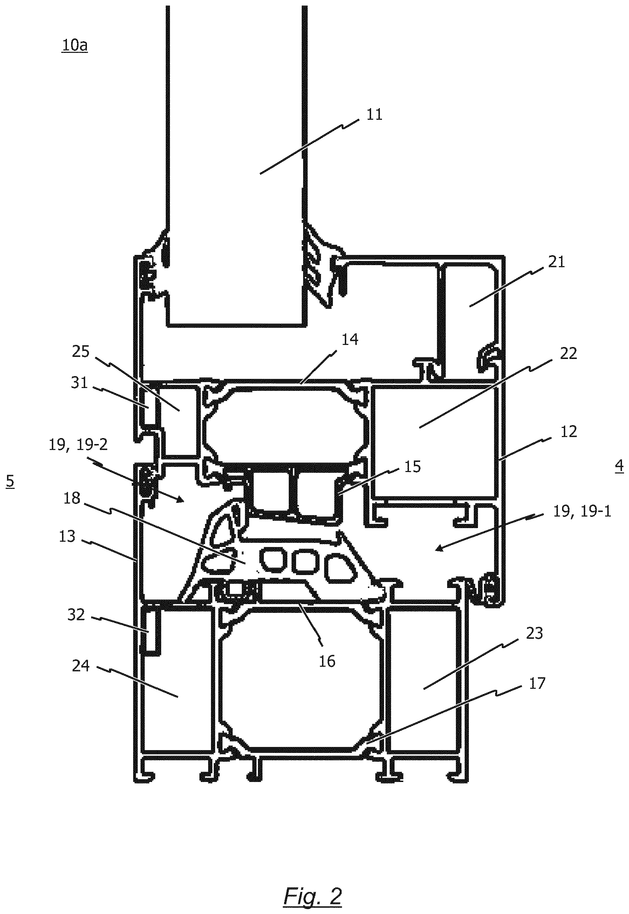

Um den Wärmeverlust zwischen der Rauminnseite 4 und der Außenseite 5 noch weiter zu verringern, ist bei den in den Figuren 2 bis 4 dargestellten, erfindungsgemäßen Rahmenanordnungen 10a, 10b und 10c jeweils mindestens ein Heizelement 31, 32, 33, 34, 35 bzw. 36 vorgesehen, welches im Zwischenraum 19 zwischen dem außenseitigen Profil 13 und dem raumseitigen Profil 12 angeordnet ist.

Aus den Figuren 2 bis 4 ist ferner zu erkennen, dass das raumseitige Profil 12 über eine Vielzahl thermischer Isolierelemente, insbesondere über vier Isolierstege 14, 15, 16 und 17 und ein geschäumtes Dämmmaterial 18, mit dem außenseitigen Profil 13 verbunden ist. Die Isolierstege 14, 15, 16 und 17 sind dem Prinzip nach aus dem Stand der Technik bekannt und dienen dazu, Wärmebrücken zwischen dem innenseitigen Profil 12 und dem außenseitigen Profil 13 zu verhindern. Der zweite Isoliersteg 15, kann, wie in den Figuren 2 bis 4 dargestellt, derart mit dem geschäumten Dämmmaterial 18 zusammenwirken, dass der Zwischenraum 19 in mindestens eine innere Profilkammer 19-1, welche zumindest teilweise durch das raumseitige Profil 12 gebildet ist, und mindestens eine äußere Profilkammer 19-2, welche zumindest teilweise durch das außenseitige Profil 13 gebildet ist, unterteilt wird. Das thermische Isolierelement 18 kann beispielsweise als schaumartiges Dämmmaterial ausgebildet sein, welches dazu ausgelegt ist, den Mittenbereich des Zwischenraums 19 auszufüllen.

Wie insbesondere in der Fig. 2 dargestellt, können insbesondere zwei Heizmittel 31 und 32 vorgesehen sein, welche sich jeweils in weiteren äußeren Profilkammern 24 bzw. 25 befinden, wobei die weiteren Profilkammern 24 bzw. 25 im Zwischenraum 19 angeordnet und an dem außenseitigen Profil 13 angebracht sind. Mit anderen Worten, die Heizmittel 31, 32 befinden sich in weiteren äußeren Profilkammern 24, 25, welche ein Teil der äußeren Profilkammer 19-2 sind.

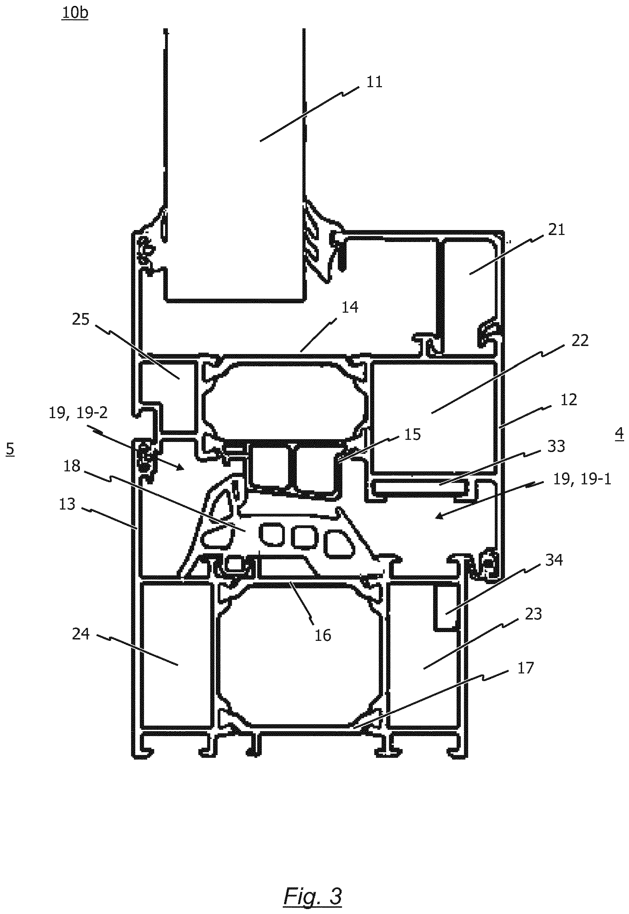

Gemäß der in der Fig. 3 dargestellten, ersten Ausführungsform der erfindungsgemäßen Rahmenanordnung ist das mindestens eine Heizmittel 33 bzw. 34 innerhalb der mindestens einen inneren Profilkammer 19-1 angeordnet. Im Einzelnen ist es gemäß der dargestellten Ausführungsform vorgesehen, dass zwei Heizmittel 33, 34 in weiteren inneren Profilkammern 21, 22, 23 angeordnet sind, wobei die weiteren inneren Profilkammern 21, 22, 23 im Zwischenraum 19 angeordnet und an dem innenseitigen Profil 12 angebracht sind. Durch die in der Fig. 3 gezeigte Anordnung der Heizmittel 33, 34 innerhalb der mindestens einen inneren Profilkammer 19-1, kann der Energieverbrauch auf ca. ein Drittel reduziert werden.

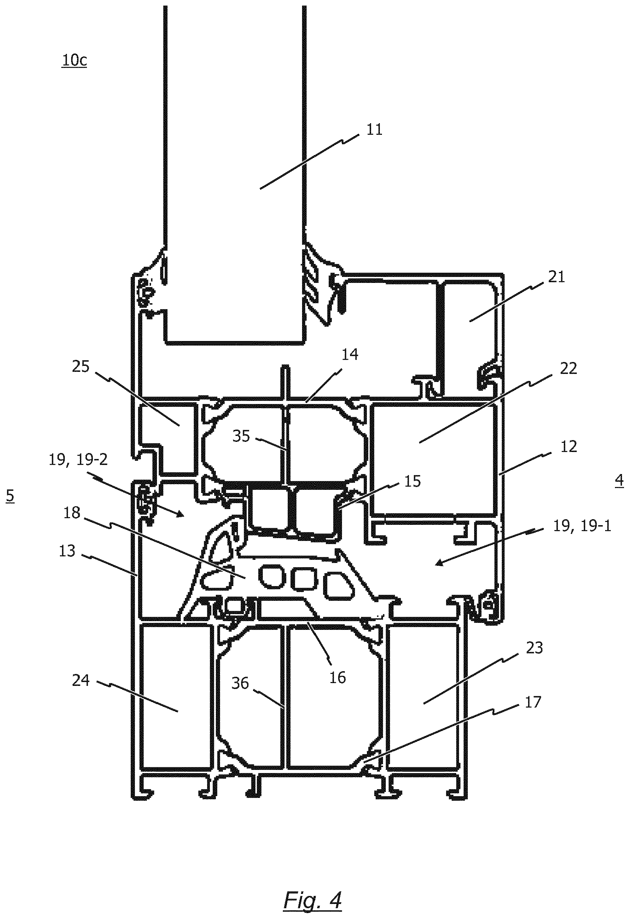

Die Darstellung gemäß Fig. 4 zeigt eine Variante bei der die Heizmittel 35 bzw. 36 zwischen der inneren und der äußeren Profilkammer 19-1 bzw. 19-2 angeordnet sind. Im Einzelnen ist es dabei vorgesehen, dass sich die Heizmittel 35 bzw. 36 zwischen den Isolierstegen 14 und 15 bzw. 16 und 17 erstrecken und somit im Wesentlichen zentral liegen. Selbstverständlich ist die vorliegende Erfindung nicht auf eine bestimmte Anzahl an Heizmittel 31, 32, 33, 34, 35 bzw. 36 beschränkt, sondern kann aus jeder möglichen Kombination der hierin gezeigten, beispielhaften Ausführungsformen bestehen. Beispielsweise ist es denkbar, dass je ein Heizmittel in jeder der weiteren Profilkammern 21, 22, 23, 24 und 25 angeordnet ist, wobei die Steuereinrichtung dazu ausgerichtet ist nur diejenigen Heizmittel anzusteuern, welche für den jeweiligen Anwendungsfall geeignet sind.

Die in den Figuren 2 bis 4 dargestellten Heizmittel 31, 32, 33, 34, 35 bzw. 36 sind in den Figuren 2 bis 4 als elektrische Heizelemente ausgebildet. Diese können beispielsweise durch ein nicht dargestelltes Photovoltaikelement betrieben werden, welches sich auf der Außenseite des außenseitigen Profils 13 befindet. Wie oben bereits angedeutet, ist es jedoch selbstverständlich auch denkbar, dass die Heizmittel auf jedem anderen geeigneten Wirkprinzip beruhen. Beispielsweise können die Heizmittel als Warmwasserheizungen ausgebildet sein. Dabei können insbesondere die weiteren Profilkammern 21, 22, 23, 24 bzw. 25 als Heizrohre verwendet werden. Selbstverständlich ist es auch denkbar, separate Heizrohre innerhalb der erfindungsgemäßen Rahmenanordnung zu verlegen.

Die vorliegende Erfindung ist nicht auf die in den Figuren gezeigten Rahmenanordnungen beschränkt, sondern wird durch die anhängenden Ansprüche definiert.

### Bezugszeichenliste

- 1: Rahmenanordnung
- 2: raumseitiges Profil
- 3: außenseitiges Profil
- 4: Rauminnenseite
- 5: Außenseite
- 6: erster Isoliersteg
- 7: zweiter Isoliersteg
- 8: schaumartiges Dämmmaterial
- 9: Zwischenraum
- 10a, 10b, 10c: Rahmenanordnung
- 11: Scheibenanordnung
- 12: raumseitiges Profil
- 13: außenseitiges Profil
- 14, 15, 16, 17: Isoliersteg
- 18: geschäumtes Dämmmaterial
- 19: Zwischenraum
- 19-1: innenseitige Profilkammer
- 19-2: außenseitige Profilkammer
- 21, 22, 23, 24, 25: weitere Profilkammern
- 31, 32, 33, 34 ,35, 36: Heizmittel

## Patentansprüche

1. Rahmenanordnung (10a, 10b, 10c) für Fenster, Türen oder Vorhängefassaden, wobei die Rahmenanordnung (10a, 10b, 10c) mindestens ein außenseitiges Profil (13) sowie mindestens ein raumseitiges Profil (12) aufweist, wobei das mindestens eine außenseitige Profil (13) über mindestens ein thermisches Isolierelement (14, 15, 16, 17, 18) mit dem raumseitigen Profil (12) derart verbunden ist, dass zwischen dem mindestens einen raumseitigen Profil (12) und dem mindestens einen außenseitigen Profil (13) ein abgeschlossener Zwischenraum (19) entsteht,
**dadurch gekennzeichnet, dass**
die Rahmenanordnung (10a, 10b, 10c) mindestens ein Heizmittel (31, 32, 33, 34, 35, 36) zum Beheizen des abgeschlossenen Zwischenraums (19) aufweist, welches im Zwischenraum (19) angeordnet ist und ausgelegt ist, den Temperaturgradienten zwischen der Rahmenanordnung (10a, 10b, 10c) und einer Rauminnenseite zu verringern.

2. Rahmenanordnung (10a, 10b, 10c) nach Anspruch 1,
wobei das mindestens eine thermische Isolierelement (18) derart zwischen dem außenseitigen Profil (13) und dem raumseitigen Profil (12) angeordnet ist, dass das mindestens eine thermische Isolierelement (18) den Zwischenraum (19) in mindestens eine innere Profilkammer (19-1), welche zumindest teilweise durch das raumseitige Profil (12) gebildet wird, und mindestens eine äußere Profilkammer (19-1), welche zumindest teilweise durch das außenseitige Profil (13) gebildet wird, unterteilt.

3. Rahmenanordnung (10b) nach Anspruch 2,
wobei mindestens ein Heizmittel ( 34) innerhalb der mindestens einen inneren Profilkammer angeordnet ist.

4. Rahmenanordnung (10a) nach Anspruch 2,
wobei mindestens ein Heizmittel (31, 32) innerhalb der mindestens einen äußeren Profilkammer angeordnet ist.

5. Rahmenanordnung (10c) nach Anspruch 2,
wobei mindestens ein Heizmittel (35) zwischen der inneren und der äußeren Profilkammer angeordnet ist.

6. Rahmenanordnung (10b) nach Anspruch 2 oder 3,
wobei die mindestens eine innere Profilkammer (19-1) eine Vielzahl weiterer innerer Profilkammern (21, 22, 23) aufweist, welche im Zwischenraum (19) angeordnet und an dem raumseitigen Profil (12) angebracht sind, und wobei mindestens ein Heizmittel ( 34) innerhalb einer der weiteren inneren Profilkammern (21, 22, 23) angeordnet ist.

7. Rahmenanordnung (10a) nach Anspruch 2 oder 4,
wobei die mindestens eine äußere Profilkammer (19-1) eine Vielzahl weiterer äußerer Profilkammern (24, 25) aufweist, welche im Zwischenraum (19) angeordnet und an dem außenseitigen Profil (13) angebracht sind, und wobei mindestens ein Heizmittel (31, 32) innerhalb einer der weiteren äußeren Profilkammern (24, 25) angeordnet ist.

8. Rahmenanordnung (10a, 10b, 10c) nach einem der Ansprüche 1 bis 7,
wobei die Rahmenanordnung (10a, 10b, 10c) eine Steuereinrichtung aufweist, welche dazu ausgelegt ist, die Heizleistung des mindestens einen Heizmittels (31, 32, 33, 34, 35, 36) auf einen vorab bestimmbaren Wert zu regulieren.

9. Rahmenanordnung (10a, 10b, 10c) nach Anspruch 8,
wobei die Steuereinrichtung dazu ausgelegt ist, die Heizleistung des mindestens einen Heizmittels (31, 32, 33, 34, 35, 36) auf einen Wert von 10W zu regulieren.

10. Rahmenanordnung (10a, 10b, 10c) nach Anspruch 8 oder 9,
wobei die Steuereinrichtung dazu ausgebildet ist, die Heizleistung des mindestens einen Heizmittels (31, 32, 33, 34, 35, 36) derart zu regulieren, dass die Temperatur im Zwischenraum (19) der Rauminnentemperatur entspricht.

11. Rahmenanordnung (10a, 10b, 10c) nach Anspruch 10,
wobei die Rahmenanordnung (10a, 10b, 10c) einen ersten Temperatursensor zur Messung der Außentemperatur sowie einen zweiten Temperatursensor zur Messung der Rauminnentemperatur aufweist.

12. Rahmenanordnung (10a, 10b, 10c) nach einem der Ansprüche 1 bis 11,
wobei die Rahmenanordnung (10a, 10b, 10c) mindestens ein erstes Solarelement aufweist, welches auf der Außenseite des mindestens einen außenseitigen Profils (13) angebracht und mit dem mindestens einen Heizmittel (31, 32, 33, 34, 35, 36) verbunden ist.

13. Rahmenanordnung (10a, 10b, 10c) nach einem der Ansprüche 1 bis 12,
wobei das mindestens eine Heizmittel (31, 32, 33, 34, 35, 36) als elektrisches Heizelement ausgebildet ist.

14. Rahmenanordnung (10a, 10b, 10c) nach einem der Ansprüche 1 bis 12,
wobei das mindestens eine Heizmittel (31, 32, 33, 34, 35, 36) als Warmwasserheizung ausgebildet ist.

## Claims

1. Frame arrangement (10a, 10b, 10c) for windows, doors or curtain walls, wherein the frame arrangement (10a, 10b, 10c) comprises at least one outer profile (13) and at least one room-side profile (12), wherein the at least one outer profile (13) is connected to the room-side profile (12) via at least one thermal insulating element (14, 15, 16, 17, 18) in such a way that a closed intermediate space (19) is created between the at least one room-side profile (12) and the at least one outer profile (13), **characterized in that**
the frame arrangement (10a, 10b, 10c) comprises at least one heating means (31, 32, 33, 34, 35, 36) for heating the closed intermediate space (19) which is disposed in the intermediate space (19) and is designed to reduce the temperature gradient between the frame arrangement (10a, 10b, 10c) and an interior of the room.

2. Frame arrangement (10a, 10b, 10c) according to Claim 1,
wherein the at least one thermal insulating element (18) is disposed between the outer profile (13) and the room-side profile (12) such that the at least one thermal insulating element (18) divides the intermediate space (19) into at least one inner profile chamber (19-1), which is formed at least partially by the room-side profile (12), and at least one outer profile chamber (19-1), which is formed at least partially by the outer profile (13).

3. Frame arrangement (10b) according to Claim 2,
wherein at least one heating means (34) is disposed within the at least one inner profile chamber.

4. Frame arrangement (10a) according to Claim 2,
wherein at least one heating means (31, 32) is disposed within the at least one outer profile chamber.

5. Frame arrangement (10c) according to Claim 2,
wherein at least one heating means (35) is disposed between the inner and the outer profile chamber.

6. Frame arrangement (10b) according to Claim 2 or 3,
wherein the at least one inner profile chamber (19-1) comprises a plurality of further inner profile chambers (21, 22, 23) which are disposed in the intermediate space (19) and are attached to the room-side profile (12), and wherein at least one heating means (34) is disposed within one of the further inner profile chambers (21, 22, 23).

7. Frame arrangement (10a) according to Claim 2 or 4,
wherein the at least one outer profile chamber (19-1) comprises a plurality of further outer profile chambers (24, 25) which are disposed in the intermediate space (19) and are attached to the outer profile (13), and wherein at least one heating means (31, 32) is disposed within one of the further outer profile chambers (24, 25).

8. Frame arrangement (10a, 10b, 10c) according to any one of Claims 1 to 7,
wherein the frame arrangement (10a, 10b, 10c) comprises a control device which is designed to regulate the heat output of the at least one heating means (31, 32, 33, 34, 35, 36) to a predeterminable value.

9. Frame arrangement (10a, 10b, 10c) according to Claim 8,
wherein the control device is designed to regulate the heat output of the at least one heating means (31, 32, 33, 34, 35, 36) to a value of 10W.

10. Frame arrangement (10a, 10b, 10c) according to Claim 8 or 9,
wherein the control device is configured to regulate the heat output of the at least one heating means (31, 32, 33, 34, 35, 36) such that the temperature in the intermediate space (19) corresponds to the temperature of the interior of the room.

11. Frame arrangement (10a, 10b, 10c) according to Claim 10,
wherein the frame arrangement (10a, 10b, 10c) comprises a first temperature sensor for measuring the outside temperature and a second temperature sensor for measuring the temperature of the interior of the room.

12. Frame arrangement (10a, 10b, 10c) according to any one of Claims 1 to 11,
wherein the frame arrangement (10a, 10b, 10c) comprises at least one first solar element, which is attached to the outside of the at least one outer profile (13) and connected to the at least one heating means (31, 32, 33, 34, 35, 36).

13. Frame arrangement (10a, 10b, 10c) according to any one of Claims 1 to 12,
wherein the at least one heating means (31, 32, 33, 34, 35, 36) is configured as an electrical heating element.

14. Frame arrangement (10a, 10b, 10c) according to any one of Claims 1 to 12,
wherein the at least one heating means (31, 32, 33, 34, 35, 36) is configured as a hot water heater.

## Revendications

1. Ensemble de cadre (10a, 10b, 10c) pour fenêtres, portes et murs rideaux, où l'ensemble de cadre (10a, 10b, 10c) présente au moins un profilé de face extérieure (13) ainsi qu'au moins un profilé de face intérieure (12), où l'au moins un profilé de face extérieure (13) est relié au profilé de face intérieure (12) par l'intermédiaire d'au moins un élément d'isolation thermique (14, 15, 16, 17, 18) de sorte qu'un espace intermédiaire (19) fermé est créé entre l'au moins un profilé de face intérieure (12) et l'au moins un profilé de face extérieure (13),
**caractérisé en ce que**
l'ensemble de cadre (10a, 10b, 10c) présente au moins un moyen de chauffage (31, 32, 33, 34, 35, 36) pour le chauffage de l'espace intermédiaire (19) fermé, lequel est disposé dans l'espace intermédiaire (19) et est prévu pour diminuer le gradient de température entre l'ensemble de cadre (10a, 10b, 10c) et la face intérieure d'une pièce.

2. Ensemble de cadre (10a, 10b, 10c) selon la revendication 1,
dans lequel l'au moins un élément d'isolation thermique (18) est disposé entre le profilé de face extérieure (13) et le profilé de face intérieure (12) de telle manière que l'au moins un élément d'isolation thermique (18) subdivise l'espace intermédiaire (19) en au moins une chambre de profilé intérieur (19-1), laquelle est formée au moins partiellement par le profilé de face intérieure (12), et au moins une chambre de profilé extérieur (19-1), laquelle est formée au moins partiellement par le profilé de face extérieure (13).

3. Ensemble de cadre (10b) selon la revendication 2,
dans lequel au moins un moyen de chauffage (34) est agencé à l'intérieur de l'au moins une chambre de profilé intérieur.

4. Ensemble de cadre (10a) selon la revendication 2,
dans lequel au moins un moyen de chauffage (31, 32) est agencé à l'intérieur de l'au moins une chambre de profilé extérieur.

5. Ensemble de cadre (10c) selon la revendication 2,
dans lequel au moins un moyen de chauffage (35) est agencé entre la chambre de profilé intérieur et la chambre de profilé extérieur.

6. Ensemble de cadre (10b) selon la revendication 2 ou 3,
dans lequel l'au moins une chambre de profilé intérieur (19-1) présente une multiplicité d'autres chambres de profilé intérieur (21, 22, 23), lesquelles sont disposées dans l'espace intermédiaire (19) et sont fixées sur le profilé de face intérieure (12), et dans lequel au moins un moyen de chauffage (34) est disposé à l'intérieur des autres chambres de profilé intérieur (21, 22, 23).

7. Ensemble de cadre (10a) selon la revendication 2 ou 4,
dans lequel l'au moins une chambre de profilé extérieur (19-1) présente une multiplicité d'autres chambres de profilé extérieur (24, 25), lesquelles sont disposées dans l'espace intermédiaire (19) et sont fixées sur le profilé de face extérieure (13), et dans lequel au moins un moyen de chauffage (31, 32) est disposé à l'intérieur d'une des autres chambres de profilé extérieur (24, 25).

8. Ensemble de cadre (10a, 10b, 10c) selon l'une des revendications 1 à 7,
où l'ensemble de cadre (10a, 10b, 10c) présente un dispositif de commande, lequel est prévu pour réguler la puissance thermique de l'au moins un moyen de chauffage (31, 32, 33, 34, 35, 36) à une valeur pouvant être déterminée préalablement.

9. Ensemble de cadre (10a, 10b, 10c) selon la revendication 8,
dans lequel le dispositif de commande est prévu pour réguler la puissance thermique de l'au moins un moyen de chauffage (31, 32, 33, 34, 35, 36) à une valeur de 10 W.

10. Ensemble de cadre (10a, 10b, 10c) selon la revendication 8 ou 9,
dans lequel le dispositif de commande est prévu pour réguler la puissance thermique de l'au moins un moyen de chauffage (31, 32, 33, 34, 35, 36) de telle manière que la température dans l'espace intermédiaire (19) correspond à la température de l'intérieur de la pièce.

11. Ensemble de cadre (10a, 10b, 10c) selon la revendication 10,
où l'ensemble de cadre (10a, 10b, 10c) présente un premier capteur de température pour la mesure de la température extérieure, ainsi qu'un second capteur de température pour la mesure de la température intérieure de la pièce.

12. Ensemble de cadre (10a, 10b, 10c) selon l'une des revendications 1 à 11,
où l'ensemble de cadre (10a, 10b, 10c) présente au moins un élément solaire, lequel est fixé sur le côté extérieur de l'au moins un profilé de face extérieure (13) et avec lequel est couplé l'au moins un moyen de chauffage (31, 32, 33, 34, 35, 36).

13. Ensemble de cadre (10a, 10b, 10c) selon l'une des revendications 1 à 12,
dans lequel l'au moins un moyen de chauffage (31, 32, 33, 34, 35, 36) est conçu sous la forme d'un élément chauffant électrique.

14. Ensemble de cadre (10a, 10b, 10c) selon l'une des revendications 1 à 12,
dans lequel l'au moins un moyen de chauffage (31, 32, 33, 34, 35, 36) est conçu sous la forme d'un chauffage par eau chaude.
